# EUROPEAN PATENT APPLICATION

(11) **EP 4 023 327 A1**
(43) Date of publication of application: **06.07.2022**
(21) Application number: 20856001.1
(22) Date of filing: 04.08.2020
(51) Int. Cl.: B01D 71/60, B01D 53/22, B01D 69/10, B01D 69/12, C08F 8/44, C08G 73/04

(54) **ACIDIC GAS SEPARATION MEMBRANE, ACIDIC GAS SEPARATION DEVICE, METHOD FOR PRODUCING ACIDIC GAS SEPARATION MEMBRANE, AND ACIDIC GAS SEPARATION METHOD**

(30) Priority: 26.08.2019 JP 2019153442
(71) Applicant: SUMITOMO CHEMICAL COMPANY LIMITED, Tokyo 103-6020 (JP)
(72) Inventor: KASHIWABARA, Taigo, Osaka-shi, Osaka 554-8558 (JP); MAKIGUCHI, Kosuke, Osaka-shi, Osaka 554-8558 (JP); AOKI, Ayumi, Osaka-shi, Osaka 554-8558 (JP); ADACHI, Tatsuhiko, Osaka-shi, Osaka 554-8558 (JP); KUWABARA, Hiroaki, Niihama-shi, Ehime 792-8521 (JP)
(74) Representative: Winter, Brandl - Partnerschaft mbB
(86) International application number: PCT/JP2020/029810
(87) International publication number: WO 2021/039309

(57) **Abstract**

An acidic gas separation membrane is selectively permeable to an acidic gas, and includes a first porous layer and a resin composition layer formed on the first porous layer with use of a resin composition. The resin composition contains a modified polyamine obtained by introducing at least one of an acidic dissociable group and a salt thereof into a polyamine. The acidic dissociable group is at least one selected from the group consisting of a carboxy group, a sulfonic acid group, an oxysulfonic acid group, a phosphoric acid group, and an oxyphosphoric acid group. The polyamine is at least one selected from the group consisting of polyethyleneimine, polyallylamine, and polyvinylamine.

## Description

### TECHNICAL FIELD

The present invention relates to an acidic gas separation membrane, an acidic gas separation device, a method for producing the acidic gas separation membrane, and an acidic gas separation method.

### BACKGROUND ART

In recent years, a gas membrane separation process attracts attention as a process of separating an acidic gas such as carbon dioxide from a synthetic gas synthesized in a plant for producing hydrogen or urea or the like, a residual exhaust gas of the synthetic gas, a natural gas, a biogas, or a combustion exhaust gas or the like because the gas membrane separation process can achieve energy saving. For example, Japanese Patent Laying-Open No. 2015-188865 (PTL 1) describes a gas separation membrane for separating carbon dioxide, and describes a gas separation membrane composed of a resin composition containing an alkali metal compound and a polyvinyl alcohol-based copolymer containing a cationic group.

### CITATION LIST

### PATENT LITERATURE

PTL 1: Japanese Patent Laying-Open No. 2015-188865

### SUMMARY OF INVENTION

### TECHNICAL PROBLEM

Incidentally, a carrier, which is a substance capable of reversibly reacting with an acidic gas, may be used for a gas separation membrane for separating the acidic gas. When the carrier is a low molecular weight compound, the carrier is used by being added to a resin composition constituting the gas separation membrane, whereby the carrier may flow out of the gas separation membrane along with the use of the gas separation membrane. Such outflow may cause deterioration in the separation performance of the gas separation membrane over time.

The present invention provides an acidic gas separation membrane, an acidic gas separation device, a method for producing the acidic gas separation membrane, and an acidic gas separation method that have good acidic gas permeation performance and can be expected to maintain stable separation performance over time.

### SOLUTION TO PROBLEM

The present invention provides an acidic gas separation membrane, an acidic gas separation device, a method for producing the acidic gas separation membrane, and an acidic gas separation method which will be described below.
[1] An acidic gas separation membrane selectively permeable to an acidic gas, the acidic gas separation membrane including:
   a first porous layer; and
   a resin composition layer formed on the first porous layer with use of a resin composition,
   wherein the resin composition contains a modified polyamine obtained by introducing at least one of an acidic dissociable group and a salt thereof into a polyamine,
   the acidic dissociable group is at least one selected from the group consisting of a carboxy group, a sulfonic acid group, an oxysulfonic acid group, a phosphoric acid group, and an oxyphosphoric acid group, and
   the polyamine is at least one selected from the group consisting of polyethyleneimine, polyallylamine, and polyvinylamine.
[2] The acidic gas separation membrane according to [1], wherein
   the modified polyamine has the salt of the acidic dissociable group, and
   a content of a cation forming the salt of the acidic dissociable group (number of moles of cation [mol]/mass of modified polyamine [g]) is greater than or equal to 5.0 × 10⁻³ mol/g.
[3] The acidic gas separation membrane according to [1] or [2], wherein the cation forming the salt of the acidic dissociable group is at least one selected from the group consisting of an alkali metal ion, an ammonium ion, and a phosphonium ion.
[4] The acidic gas separation membrane according to any one of [1] to [3], wherein the acidic dissociable group contains at least a carboxy group.
[5] The acidic gas separation membrane according to any one of [1] to [4], wherein the resin composition layer further contains a water-absorbent resin.
[6] The acidic gas separation membrane according to any one of [1] to [5], wherein the acidic gas separation membrane includes a second porous layer on a side of the resin composition layer opposite to the first porous layer.
[7] An acidic gas separation device including the acidic gas separation membrane according to any one of [1] to [6].
[8] A method for producing an acidic gas separation membrane selectively permeable to an acidic gas,
   the method including applying a coating liquid onto a first porous layer,
   wherein the coating liquid contains a resin composition containing a modified polyamine obtained by introducing at least one of an acidic dissociable group and a salt thereof into a polyamine,
   the acidic dissociable group is at least one selected from the group consisting of a carboxy group, a sulfonic acid group, and a phosphoric acid group, and
   the polyamine is at least one selected from the group consisting of polyethyleneimine, polyallylamine, and polyvinylamine.
[9] An acidic gas separation method including bringing a source gas containing at least an acidic gas into contact with the acidic gas separation membrane according to any one of [1] to [6] to separate the acidic gas.

### ADVANTAGEOUS EFFECTS OF INVENTION

The present invention can provide an acidic gas separation membrane, an acidic gas separation device, a method for producing the acidic gas separation membrane, and an acidic gas separation method that have good acidic gas permeation performance and can be expected to maintain stable separation performance over time.

### BRIEF DESCRIPTION OF DRAWINGS

Fig. 1 is a schematic cross-sectional view schematically showing an example of an acidic gas separation membrane of the present invention.
Fig. 2A is a schematic perspective view showing an example of an acidic gas separation membrane element including the acidic gas separation membrane of the present invention, in which a partially developed portion is provided.
Fig. 2B is a schematic perspective view showing another example of the acidic gas separation membrane element including the acidic gas separation membrane of the present invention, in which a partially developed portion is provided.
Fig. 3 is a schematic view schematically showing an acidic gas separation device used in Examples.

### DESCRIPTION OF EMBODIMENTS

### (Acidic gas separation membrane)

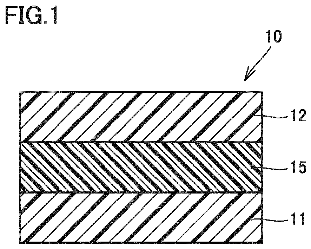

Fig. 1 is a schematic cross-sectional view schematically showing an example of an acidic gas separation membrane. An acidic gas separation membrane 10 of the present embodiment is selectively permeable to an acidic gas, and includes a first porous layer 11 and a resin composition layer 15 formed on first porous layer 11 with use of a resin composition. Acidic gas separation membrane 10 may further include a second porous layer 12 on a side of resin composition layer 15 opposite to first porous layer 11 as shown in Fig. 1. Acidic gas separation membrane 10 may be sheet-shaped or tube-shaped, but is preferably sheet-shaped.

Examples of the acidic gas selectively permeating through acidic gas separation membrane 10 include carbon dioxide (CO₂), hydrogen sulfide (H₂S), carbonyl sulfide, sulfur oxide (SOₓ), nitrogen oxide (NOₓ), and hydrogen halide such as hydrogen chloride. The acidic gas is preferably at least one of carbon dioxide and hydrogen sulfide, and more preferably carbon dioxide.

Hereinafter, members constituting acidic gas separation membrane 10 will be described.

### (Resin composition layer)

Resin composition layer 15 is a separation functional layer selectively permeable to an acidic gas. Resin composition layer 15 is a layer formed with use of a resin composition, and can be, for example, a gel-like layer. The thickness of resin composition layer 15 may be appropriately selected depending on separation performance required for acidic gas separation membrane 10. Usually, it is preferably greater than or equal to 0.1 µm and less than or equal to 600 µm, more preferably greater than or equal to 0.5 µm and less than or equal to 400 µm, and particularly preferably greater than or equal to 1 µm and less than or equal to 200 µm.

### (Modified polyamine)

The resin composition constituting resin composition layer 15 contains, as a carrier selectively permeable to the acidic gas, a modified polyamine obtained by introducing at least one of an acidic dissociable group and a salt thereof into a polyamine. The acidic dissociable group is at least one selected from the group consisting of a carboxy group (-COOH), a sulfonic acid group (-SO₃H), an oxysulfonic acid group (-O-SO₃H), a phosphoric acid group (-P(O)(OH)₂), and an oxyphosphoric acid group (-O-P(O)(OH)₂). The salt of the acidic dissociable group is formed by exchanging protons of the acidic dissociable group with cations such as alkali metal ions, ammonium ions, and phosphonium ions. The polyamine is at least one selected from the group consisting of polyethyleneimine, polyallylamine, and polyvinylamine.

The modified polyamine contained in the resin composition contains the acidic dissociable group and the salt thereof, whereby the water absorbability of resin composition layer 15 can be improved. When the cation forming the salt of the acidic dissociable group is at least one selected from the group consisting of an alkali metal ion, an ammonium ion, and a phosphonium ion which will be described later, the affinity of resin composition layer 15 with the acidic gas is considered to be able to be enhanced. Therefore, resin composition layer 15 contains the modified polyamine containing the acidic dissociable group and/or the salt thereof, whereby the permeation performance of the acidic gas can be improved.

In acidic gas separation membrane 10, the modified polyamine is used as the carrier, whereby resin composition layer 15 contains the acidic dissociable group and/or the salt thereof. The modified polyamine is obtained by introducing the acidic dissociable group and/or the salt thereof into the polyamine as a high molecular weight compound, whereby the modified polyamine is considered to be less likely to flow out of resin composition layer 15 even when acidic gas separation membrane 10 is used for a long period of time. This can be expected to make it possible to suppress deterioration in the separation performance of the acidic gas provided by acidic gas separation membrane 10 over time, and stably maintain the separation performance of the acidic gas over time. Meanwhile, when a low molecular weight compound such as a low molecular weight amine compound and/or a salt thereof or an alkali metal compound is contained as the carrier, the low molecular weight compound is presumed to flow out of the resin composition layer along with the use of the acidic gas separation membrane, depending on the conditions for separating the acidic gas, which is apt to cause deterioration in the separation performance of the acidic gas provided by the acidic gas separation membrane over time.

As described above, the salt of the acidic dissociable group is formed by the acidic dissociable group and the cations such as an alkali metal ion, an ammonium ion, and a phosphonium ion. The alkali metal ion forming the salt of the acidic dissociable group is preferably at least one selected from the group consisting of a lithium ion, a sodium ion, a potassium ion, a rubidium ion, and a cesium ion, and more preferably at least one of cesium and rubidium. The cation may be any one of an alkali metal ion, an ammonium ion, and a phosphonium ion, or a combination of two or more thereof.

The ammonium ion forming the salt of the acidic dissociable group is not particularly limited, but is preferably at least one selected from the group consisting of a 2-hydroxyethyltrimethylammonium ion; a bis(2-hydroxyethyl)dimethylammonium ion; a tris(2-hydroxyethyl)methylammonium ion; tetraalkylammonium ions such as a tetramethylammonium ion, a tetraethylammonium ion, a tetrapropylammonium ion, a tetrabutylammonium ion, a N,N,N-tetramethyl-1-adamantylammonium ion, a tetradecyltrimethylammonium ion, a hexadecyltrimethylammonium ion, a methyltributylammonium ion, and a tri-n-octylmethylammonium ion; benzyltrialkylammonium salts such as a benzyltrimethylammonium ion, a benzyltributylammonium ion, and a benzyldimethyloctadecylammonium ion; a phenyltrimethylammonium ion; a diphenyldimethylammonium ion; and imidazolium ions.

Examples of the imidazolium ion include a 1-butyl-3-methylimidazolium ion, a 1-ethyl-3-methylimidazolium ion, a 1-ethyl-3-hexylimidazolium ion, a 1-butyl-2,3-dimethylimidazolium ion, a 1,3-dimethylimidazolium ion, a 1-benzyl-3-methylimidazolium ion, a 1,3-diadamantylimidazolium ion, a 1,3-bis(2,6-diisopropylphenyl)imidazolium ion, a 1,3-bis(2,4,6-trimethylphenyl)imidazolium ion, a 1,3-di(t-butyl)imidazolium ion, a 1,3-diisopropylimidazolium ion, and a 1,3-di(cyclohexyl)imidazolium ion.

The ammonium ion forming the salt of the acidic dissociable group is more preferably a 2-hydroxyethyltrimethylammonium ion.

The phosphonium ion forming the salt of the acidic dissociable group is not particularly limited, but is preferably at least one selected from the group consisting of tetraalkylphosphonium ions such as a tetrabutylphosphonium ion, a methyltributylphosphonium ion, a tetra-n-hexylphosphonium ion, a tetra-n-octylphosphonium ion, a tetraethylphosphonium ion, a tributyldodecylphosphonium ion, and a tetrakis(hydroxymethyl)phosphonium ion.

The acidic dissociable group is introduced into the polyamine by, for example, chemical modification, to provide the modified polyamine, and the polyamine constitutes a polyamine skeleton of the modified polyamine. As described above, the polyamine is selected from the group consisting of polyethyleneimine, polyallylamine, and polyvinylamine. These polyamines have good heat resistance, whereby the polyamines can also be suitably used for resin composition layer 15 of acidic gas separation membrane 10 used under high-temperature conditions.

The polyethyleneimine used as the polyamine may have a linear structure or a branched structure. The polyethyleneimine can be obtained by the ring-opening polymerization of ethyleneimine, and may contain a constituent unit copolymerizable with the ethyleneimine (however, the number of constituent units other than the ethyleneimine is less than 50 mol% of the total number of constituent units constituting the polyethyleneimine). The polyethyleneimine is preferably a homopolymer of the ethyleneimine.

The molecular weight (Mw) of the polyethyleneimine is not particularly limited, but the polyethyleneimine is preferably a high-molecular-weight compound in order to suppress the outflow of the polyethyleneimine from the resin composition layer. The molecular weight is usually greater than or equal to 1000, preferably greater than or equal to 5000, more preferably greater than or equal to 10,000, and still more preferably greater than or equal to 50,000. The molecular weight is usually less than or equal to 5,000,000, and preferably less than or equal to 2,000,000.

The polyallylamine used as the polyamine is a polymer containing allylamine as a constituent unit. The polyallylamine may be a copolymer containing a constituent unit copolymerizable with the allylamine (however, the number of constituent units other than the allylamine is less than 50 mol% of the total number of constituent units constituting the polyallylamine). The polyallylamine is preferably a homopolymer of the allylamine.

The molecular weight (Mw) of the polyallylamine is not particularly limited, but the polyallylamine is preferably a high-molecular-weight compound in order to suppress the outflow of the polyallylamine from the resin composition layer. The lower limit of the molecular weight is usually greater than or equal to 1000, preferably greater than or equal to 5000, and more preferably greater than or equal to 10,000. The molecular weight is usually less than or equal to 5,000,000, and preferably less than or equal to 2,000,000.

The polyvinylamine used as the polyamine is a polymer containing vinylamine as a constituent unit. The polyvinylamine can be produced, for example, by polymerizing N-vinylcarboxylic acid amide or N-vinylformamide, followed by hydrolyzing. The polyvinylamine may contain a constituent unit copolymerizable with the vinylamine (however, the number of constituent units other than the vinylamine is less than 50% mol of the total number of constituent units constituting the polyvinylamine). The polyvinylamine is preferably a homopolymer of the vinylamine.

The molecular weight (Mw) of the polyvinylamine is not particularly limited, but the polyvinylamine is preferably a high-molecular-weight compound in order to suppress the outflow of the polyvinylamine from the resin composition layer. The lower limit of the molecular weight is usually greater than or equal to 1000, preferably greater than or equal to 5000, and more preferably greater than or equal to 10,000. The molecular weight is usually less than or equal to 5,000,000, and preferably less than or equal to 2,000,000.

The modified polyamine preferably has a structure represented by the following formula (1) or formula (2). In this case, one structure selected from the structures represented by the formula (1) and the formula (2) may be bonded to a nitrogen atom constituting the polyamine of the modified polyamine, or two structures may be bonded to the nitrogen atom. 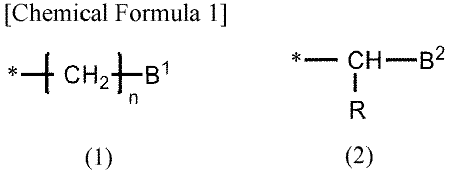 [In the formula (1) and the formula (2),
B¹ and B² represent one of the acidic dissociable group and the salt thereof described above.
R represents a monovalent hydrocarbon group having 1 to 15 carbon atoms, which may have a substituent, and one or two or more of any carbon atoms in the hydrocarbon group may be each independently replaced with a nitrogen atom, a sulfur atom, or an oxygen atom.
n represents an integer of greater than or equal to 1 and less than or equal to 5. ^{∗} represents a bond with the nitrogen atom constituting the polyamine in the modified polyamine described above.]

Herein, the hydrocarbon group refers to a group consisting only of a carbon atom and a hydrogen atom, and may be an aliphatic hydrocarbon group or an aromatic hydrocarbon group. The monovalent aromatic hydrocarbon group may be a group consisting only of an aromatic ring structure or a group having an aromatic ring structure and a structure other than the aromatic ring structure.

Herein, the number of carbon atoms of a group in which one or two or more of any carbon atoms in the monovalent hydrocarbon group are each independently replaced with a nitrogen atom, a sulfur atom, or an oxygen atom refers to the number of carbon atoms before being replaced with these atoms, and the number of carbon atoms when the monovalent hydrocarbon group has a substituent refers to the number of carbon atoms before having a substituent.

B¹ in the formula (1) and B² in the formula (2) represent one of the acidic dissociable group and the salt thereof described above. Specifically, B¹ and B² are each independently a carboxy group (-COOH), a sulfonic acid group (-SO₃H), an oxysulfonic acid group (-O-SO₃H), a phosphoric acid group (-P(O)(OH)₂), an oxyphosphoric acid group (-O-P(O)(OH)₂), or salts thereof. B¹ and B² are each independently preferably a carboxy group or a salt of the carboxy group such as an alkali metal salt or ammonium salt of the carboxy group.

In the formula (1), n represents an integer of greater than or equal to 1 and less than or equal to 5, but is preferably an integer of greater than or equal to 1 and less than or equal to 3, and more preferably 1 or 2.

Examples of the monovalent hydrocarbon group in R in the formula (2) include a monovalent saturated hydrocarbon group, a monovalent unsaturated aliphatic hydrocarbon group, and a monovalent aromatic hydrocarbon group.

Examples of the monovalent saturated hydrocarbon group include a linear alkyl group such as a methyl group, an ethyl group, a propyl group, a butyl group, a pentyl group, or a hexyl group; a branched alkyl group such as an isopropyl group, an isobutyl group, a sec-butyl group, a tert-butyl group, an isopentyl group, or a neopentyl group; and an alicyclic saturated hydrocarbon group such as a cyclopropyl group, a cyclopentyl group, or a cyclohexyl group.

Examples of the monovalent unsaturated aliphatic hydrocarbon group include a monovalent chain unsaturated hydrocarbon group such as a vinyl group, a propenyl group, a butenyl group, or a pentenyl group; and a monovalent alicyclic unsaturated hydrocarbon group such as a cyclopropenediyl group, a cyclopentenediyl group, or a cyclohexenediyl group.

Examples of the monovalent aromatic hydrocarbon group include a phenyl group, a biphenyl group, a tolyl group, a xylyl group, a naphthyl group, an indenyl group, a benzyl group, a pyrrole group, a pyrazole group, and an indole group.

Examples of a substituent of the monovalent hydrocarbon group having 1 to 15 carbon atoms, which may have the substituent for R in the formula (2) include -OH, - COOH, -CONH₂, -NH₂, -SH, and -CN. Among them, at least one selected from the group consisting of -OH, -COOH, -NH₂, and -CN is preferable.

In the formula (2), R is preferably -(CH2)m-NH2, -(CH2)m-OH, or -(CH2)m-NH-C(NH)-NH₂ [m represents an integer of greater than or equal to 1 and less than or equal to 5], and examples thereof include -(CH₂)₄-NH₂, -CH₂-OH, and -(CH₂)₃-NH-C(NH)-NH₂.

In the formula (1) and the formula (2), ^{∗} represents a bond with a nitrogen atom. This nitrogen atom is contained in the polyamine used to obtain the modified polyamine in the modified polyamine.

When the modified polyamine has the salt of the acidic dissociable group, the content of a cation forming the salt of the acidic dissociable group is preferably greater than or equal to 5.0×10⁻³ mol/g, and more preferably greater than or equal to 7.5x 10⁻³ mol/g, and may be greater than or equal to 10×10⁻³ mol/g. The content of the cation may be usually less than or equal to 20×10⁻³ mol/g or less than or equal to 15×10⁻³ mol/g. The content of the cation is within the above range, whereby the permeation performance of the acidic gas can be improved.

The content of the cation is represented by the number of moles [mol] of the cation forming the salt of the acidic dissociable group of the modified polyamine/the mass [g] of the modified polyamine. Here, the mass [g] of the modified polyamine is the mass [g] of the modified polyamine when the acidic dissociable group of the modified polyamine is assumed to be in an unneutralized form.

One or two or more of the acidic dissociable groups and the salts thereof contained in the modified polyamine may be used. The acidic dissociable group of the modified polyamine preferably contains a carboxy group. The polyamine is preferably polyethyleneimine or polyallylamine. One or two or more of the modified polyamines contained in the resin composition may be used.

The modified polyamine having an acidic dissociable group can be obtained, for example, by chemically modifying a polyamine with a compound having an acidic dissociable group. Examples of the compound having an acidic dissociable group include bromoacetic acid, 1,3-propanesultone, bromomethylphosphonic acid, and bromomethylsulfonic acid.

The modified polyamine having a salt of an acidic dissociable group can be obtained, for example, by first obtaining a modified polyamine having an acidic dissociable group, and mixing the obtained polyamine with a compound containing at least one cation selected from the group consisting of an alkali metal ion, an ammonium ion, and a phosphonium ion for forming the acidic dissociable group into a salt form. Alternatively, the modified polyamine having a salt of an acidic dissociable group can also be obtained by chemically modifying a polyamine with a compound having a structure in which a proton of an acidic dissociable group is replaced with an alkyl group (for example, a compound having an alkyl ester moiety), and hydrolyzing the alkyl group with the compound containing a cation. Examples of the compound containing a cation include those exemplified in Basic Compound which will be described later. When the resin composition contains the modified polyamine having a salt of an acidic dissociable group, and a basic compound and/or a water-absorbent resin which will be described later, the compound containing a cation used for forming the salt of the acidic dissociable group of the modified polyamine may be the same compound as or different from the compound containing a cation used for forming the salt of the acidic dissociable group of the water-absorbent resin and/or the basic compound.

The content of the modified polyamine is preferably greater than or equal to 15% by weight, and more preferably greater than or equal to 20% by weight, and preferably less than or equal to 50% by weight, and more preferably less than or equal to 35% by weight based on 100% by weight of the weight of the resin composition in a state where all the acidic dissociable groups are unneutralized. When the content of the modified polyamine is greater than 50% by weight, the coatability of the resin composition is deteriorated. When the content of the modified polyamine is less than 15% by weight, sufficient acidic gas separation performance cannot be obtained.

### (Other components contained in resin composition)

In addition to the modified polyamine, the resin composition may contain, as additives, a water-absorbent resin, a basic compound, a medium, a surfactant, and a hydration reaction catalyst promoting the permeation of the resin composition layer upon a hydration reaction with the acidic gas, and the like.

### (Water-absorbent resin)

The water-absorbent resin can impart appropriate water retentivity to resin composition layer 15 of acidic gas separation membrane 10. The water-absorbent resin refers to a polymer having a hydrophilic functional group other than the modified polyamine in its polymer molecule. Examples of the hydrophilic functional group include acidic dissociable groups such as a carboxy group, a sulfo group, and a phosphoric acid group; alkali metal salts of acidic dissociable groups; ammonium salts of acidic dissociable groups; acidic dissociable phosphonium salts; a hydroxyl group; a cyano group; an oxyalkylene group; a butyral group; an acetyl group; an amino group; an amide group; a silanol group; an ammonium group; and an isocyanate group. The water-absorbent resin is preferably a polymer swollen by an aqueous medium such as water or a medium containing water as a main component (containing water in an amount of greater than or equal to 50% by weight), or a polymer having a property of being dissolved or uniformly dispersed in an aqueous medium.

One or two or more of constituent units constituting the water-absorbent resin may be used. When the water-absorbent resin contains two or more constituent units, the hydrophilic functional group may be contained in any of the constituent units, or may be contained in all the constituent units. One or two or more of the hydrophilic functional groups may be contained in one constituent unit, and when the two or more hydrophilic functional groups are contained, the hydrophilic functional groups may be the same, or may contain two or more kinds of functional groups.

The water-absorbent resin is preferably a polymer having a hydroxyl group, a polymer having an acidic dissociable group, a polymer having an oxyalkylene group, or a polymer having two or three of a hydroxyl group, an acidic dissociable group, and an oxyalkylene group.

The polymer having a hydroxyl group is not particularly limited. The polymer having a hydroxyl group may be composed of one constituent unit having a hydroxyl group, may be composed of two or more constituent units having a hydroxyl group, or may be composed of a combination of a constituent unit having a hydroxyl group and a constituent unit having no hydroxyl group.

Examples of the polymer having a hydroxyl group include polyvinyl alcohol, polyhydroxyethyl (meth)acrylate, polyhydroxypropyl (meth)acrylate, and polyhydroxybutyl (meth)acrylate, and polyvinyl alcohol is preferable. Herein, the "(meth)acrylate" represents at least one selected from the group consisting of acrylate and methacrylate. The same applies to the notation of "(meth)acrylic" and the like.

A copolymer containing polyvinyl alcohol or a vinyl alcohol unit can be obtained by saponifying at least a part of a structural unit derived from a vinyl ester of a fatty acid. The polyvinyl alcohol can be usually obtained by hydrolyzing polyvinyl acetate. Examples of the polyvinyl alcohol include "Kuraray Poval (registered trademark)" available from Kuraray Co., Ltd., and "J-Poval (registered trademark)" available from Japan Vam & Poval Co., Ltd.

Polyhydroxyethyl (meth)acrylate, polyhydroxypropyl (meth)acrylate, and polyhydroxybutyl (meth)acrylate and the like can be obtained by polymerizing a monomer having a hydroxyl group. Examples of the monomer having a hydroxyl group include hydroxyethyl (meth)acrylate, hydroxypropyl (meth)acrylate, and hydroxybutyl (meth)acrylate.

The acidic dissociable group of the polymer having the acidic dissociable group refers to a functional group capable of releasing a proton (H⁺) in a medium, and examples thereof include a carboxy group (-COOH), a sulfonic acid group (-SO₃H), an oxysulfonic acid group (-O-SO₃H), a phenolic hydroxyl group, a phosphoric acid group (-P(O)(OH)₂ (phosphono group)), and an oxyphosphoric acid group (-O-P(O)(OH)₂ (phosphonooxy group)). The phenolic hydroxyl group is widely known to be different from a general hydroxyl group as an acidic dissociable group capable of releasing a proton. Only one or two or more of the acidic dissociable groups of the water-absorbent resin may be used. The acidic dissociable group is preferably a carboxy group, a sulfonic acid group, or a phenolic hydroxyl group, and more preferably a carboxy group.

Examples of the polymer having the acidic dissociable group include poly (meth)acrylic acid, polystyrene sulfonic acid, polyvinyl sulfonic acid, a phenolformalin resin, a resorcin-formalin resin, polyvinyl phosphonic acid, polystyrene phosphonic acid, polyvinyl phosphoric acid, polyhydroxystyrene, and polyvinyl phenol, and poly (meth)acrylic acid is preferable.

Examples of the oxyalkylene group of the polymer having the oxyalkylene group include an oxymethylene group, an oxyethylene group, an oxypropylene group, and an oxybutylene group. Only one or two or more of the oxyalkylene groups of the water-absorbent resin may be used.

Examples of the polymer having the oxyalkylene group include polyalkylene glycols such as polyethylene glycol, polypropylene glycol, and polybutylene glycol, and polyethylene glycol is preferable.

The water-absorbent resin may be crosslinked, or a crosslinked polymer and a non-crosslinked polymer may be used in the form of a mixture. Herein, the "crosslinked polymer" means a chemically or physically crosslinked polymer. The "chemical crosslinking" means intermolecular or intramolecular crosslinking by a covalent bond. The crosslinking form is not particularly limited, and examples thereof include crosslinking by a crosslinking agent having a vinyl group or an epoxy group that reacts with a crosslinking group of the water-absorbent resin, and a crosslinking method in which radicals are generated in a carbon chain (main chain) of the water-absorbent resin to form a carbon-carbon covalent bond. The "physical crosslinking" means a crosslinked form by hydrogen bonding, coordination bonding, ionic bonding, helix formation, or a hydrophilic/hydrophobic interaction or the like. Chemical crosslinking and physical crosslinking are described, for example, in "popular edition of Gel Handbook, published by NTN Co., Ltd., 2003 (second edition)".

Examples of the crosslinked polymer include a (meth)acrylic acid-based water-absorbent crosslinked polymer, a (meth)acrylamide-based water-absorbent crosslinked polymer, a vinyl alcohol-based water-absorbent crosslinked polymer, an alkylene oxide-based water-absorbent crosslinked polymer such as ethylene oxide, a sulfonic acid-based water-absorbent crosslinked polymer, an aspartic acid-based water-absorbent crosslinked polymer, a glutamic acid-based water-absorbent crosslinked polymer, an alginate-based water-absorbent crosslinked polymer, a starch-based water-absorbent crosslinked polymer, and a cellulose-based water-absorbent crosslinked polymer.

The crosslinked polymer is preferably a (meth)acrylic acid-based water-absorbent crosslinked polymer having a carboxy group, a vinyl alcohol-based water-absorbent crosslinked polymer, or an alkylene oxide-based water-absorbent crosslinked polymer.

The (meth)acrylic acid-based crosslinked polymer having a carboxy group may further have other acidic dissociable group different from the carboxy group. Examples of the other acidic dissociable group include a sulfo group, a phosphoric acid group, and an oxyphosphoric acid group. The other acidic dissociable group can be introduced into the crosslinked polymer by polymerizing a monomer having this group together with the above-described (meth)acrylic acid or the like, or adding a monomer or polymer having the other acidic dissociable group to the water-absorbent crosslinked polymer obtained by polymerization.

The (meth)acrylic acid-based non-crosslinked polymer having the carboxy group may contain a constituent unit derived from at least one selected from the group consisting of maleic acid, fumaric acid, crotonic acid and salts thereof, vinyl alcohol, and (meth)acrylamide, in addition to the constituent unit derived from the (meth)acrylic acid.

The non-crosslinked polymer having the acidic dissociable group is more preferably non-crosslinked poly (meth)acrylic acid having a carboxy group.

As the water-absorbent resin, a copolymer having a hydroxyl group and an acidic dissociable group may be used in addition to the polymer having the hydroxyl group and the polymer having the acidic dissociable group described above. Examples of such a copolymer include a polyvinyl alcohol-poly (meth)acrylic acid copolymer. The copolymer may be any of a random copolymer, an alternating copolymer, a block copolymer, and a graft copolymer.

Examples of the water-absorbent resin include at least one selected from the group consisting of poly (meth)acrylic acid, polyvinyl alcohol, a polyvinyl alcohol-poly (meth)acrylic acid copolymer, an alkyl aldehyde-modified product of polyvinyl alcohol (for example, polyvinyl butyral or the like), a polyethylene oxide having a hydroxyl group at its main chain terminal, a polypropylene oxide having a hydroxyl group at its main chain terminal, a polyethylene oxide-polypropylene oxide copolymer having a hydroxyl group at its main chain terminal, polyethylene glycol, polyvinyl sulfonic acid, polystyrene sulfonic acid, polyvinyl pyrrolidone, and polyhydroxyalkyl (meth)acrylate. The main chain refers to a chain in which repeating structural units of a polymer are linked.

When the water-absorbent resin has the acidic dissociable group, the proton of the acidic dissociable group is preferably exchanged with a cation such as a metal ion, an ammonium ion, or a phosphonium ion to form a salt. The salt of the acidic dissociable group is formed by the acidic dissociable group and the cation such as a metal ion, an ammonium ion, or a phosphonium ion. The metal ion forming the salt of the acidic dissociable group is preferably an alkali metal ion, more preferably at least one selected from the group consisting of a lithium ion, a sodium ion, a potassium ion, a rubidium ion, and a cesium ion, and still more preferably at least one of cesium and rubidium. Examples of the ammonium ion and the phosphonium ion include those exemplified as the cation that forms the salt of the acidic dissociable group of the modified polyamine. The cation may be any one of an ammonium ion, a phosphonium ion, and an alkali metal ion, or a combination of two or more thereof.

The resin composition may contain one or two or more water-absorbent resins. The water-absorbent resins are distinguished based on the difference between chemical structures. The two or more water-absorbent resins mean that two or more water-absorbent resins varying in terms of a functional group specie, number of functional groups, a crosslinked structure, a degrees of crosslinking, presence or absence of crosslinking, and molecular weight distribution and the like are contained. The total content of the water-absorbent resin in the resin composition is preferably greater than or equal to 1% by weight, more preferably greater than or equal to 5% by weight, and still more preferably greater than or equal to 10% by weight based on 100% by weight of the solid content concentration in the resin composition. The total content is usually less than or equal to 60% by weight, and may be less than or equal to 40% by weight.

### (Basic compound)

The basic compound can enhance affinity with the acidic gas in resin composition layer 15 of acidic gas separation membrane 10, whereby the basic compound is considered to be able to promote the transportation of the acidic gas in resin composition layer 15 to improve separation performance. Examples of the basic compound include at least one selected from an alkali metal salt, an ammonium salt, a phosphonium salt, and amine compounds.

The alkali metal element contained in the alkali metal salt is preferably at least one selected from the group consisting of lithium, sodium, potassium, rubidium, and cesium, and more preferably at least one of cesium and rubidium.

Examples of the alkali metal salt include an alkali metal carbonate, an alkali metal hydrogen carbonate, an alkali metal hydroxide, an alkali metal hydride, and alkali metal alkoxide. The alkali metal salt is preferably at least one selected from the group consisting of an alkali metal carbonate, an alkali metal hydrogen carbonate, and an alkali metal hydroxide, and is preferably at least one selected from the group consisting of cesium carbonate, cesium hydrogen carbonate, cesium hydroxide, rubidium carbonate, rubidium hydrogen carbonate, and rubidium hydroxide.

The ammonium salt is preferably an ammonium salt in which an anion moiety is a hydroxide ion, and examples thereof include 2-hydroxyethyltrimethylammonium hydroxide; bis(2-hydroxyethyl)dimethylammonium hydroxide; tris(2-hydroxyethyl)methylammonium hydroxide; tetraalkylammonium hydroxides such as tetramethylammonium hydroxide, tetraethylammonium hydroxide, tetrapropylammonium hydroxide, tetrabutylammonium hydroxide, N,N,N-tetramethyl-1-adamantylammonium hydroxide, tetradecyltrimethylammonium hydroxide, hexadecyltrimethylammonium hydroxide, methyltributylammonium hydroxide, and tri-n-octylmethylammonium hydroxide; benzyltrialkylammonium hydroxides such as benzyltrimethylammonium hydroxide, benzyltributylammonium hydroxide, and benzyldimethyloctadecylammonium hydroxide; phenyltrimethylammonium hydroxide; and diphenyldimethylammonium hydroxide. These corresponding hydroxides can be obtained from the corresponding quaternary ammonium halide salts available by known methods such as anion exchange.

The phosphonium salt is preferably a phosphonium salt in which an anion moiety is a hydroxide ion, and examples thereof include tetrabutylphosphonium hydroxide, methyltributylphosphonium hydroxide, tetra-n-hexylphosphonium hydroxide, tetra-n-octylphosphonium hydroxide, tetraethylphosphonium hydroxide, tributyldodecylphosphonium hydroxide, and tetrakis(hydroxymethyl)phosphonium hydroxide. These corresponding hydroxides can be obtained from the corresponding halide salts of phosphonium salts available by known methods such as anion exchange.

Examples of the amine compound include amino acids; amines having one primary amino group such as alkanolamine (example: monoethanolamine) and 3-amino-1-propanol; amines having one secondary amino group such as diethanolamine and 2-methylaminoisopropanol; amines having one tertiary amino group such as triethanolamine; amines having two primary amino groups such as ethylenediamine; amines having two secondary amino groups such as N,N'-bis(2-hydroxyethyl)ethylenediamine; amines having one cyclic amino group such as pyrrolidine, piperidine, morpholine, N-methylmorpholine, thiomorpholine, and hexamethyleneimine; amines having two cyclic amino groups such as piperazine, 2-methylpiperazine, 1-methylpiperazine, and 1,4-dimethylpiperazine; and amines having a plurality of amino groups such as diethylenetriamine and tetraethylenepentamine.

Examples of the amino acid include amino acids such as glycine, N-methylglycine, N,N-dimethylglycine, alanine, serine, proline, taurine, diaminopropionic acid, 2-aminopropionic acid, 2-aminoisobutyric acid, and 3,4-dihydroxyphenylalanine.

The amine compound is preferably at least one selected from amino acids and salts thereof, and more preferably glycine or N-methylglycine.

### (Medium)

Examples of a medium include protic polar solvents such as water, and alcohols (such as methanol, ethanol, 1-propanol, and 2-propanol); nonpolar solvents such as toluene, xylene, and hexane; aprotic polar solvents such as ketones (such as acetone, methyl ethyl ketone, and methyl isobutyl ketone), N-methylpyrrolidone, N,N-dimethylacetamide, and N,N-dimethylformamide; and the like. A single kind of medium may be used alone, or greater than or equal to two kinds of media may be used in combination as long as they are compatible with each other. Among these, a medium containing at least one selected from the group consisting of water and alcohols (such as methanol, ethanol, 1-propanol, and 2-propanol) is preferable, and a medium containing water is more preferable.

### (Surfactant)

The surfactant is not particularly limited, and, for example, conventionally known surfactants such as polyoxyethylene polyoxypropylene glycols, polyoxyethylene alkyl phenyl ethers, polyoxyethylene alkyl ethers, fluorine-based surfactants, and silicone-based surfactants can be used. A single kind of surfactant may be used alone, or greater than or equal to two kinds of surfactants may be used in combination. The coating liquid contains the surfactant, whereby the dispersibility of the substance contained in the coating liquid is improved, which provides improved coatability of the coating liquid.

### (Hydration reaction catalyst)

The hydration reaction catalyst that promotes the hydration reaction with the acidic gas preferably contains an oxo acid compound, more preferably contains at least one elemental oxo acid compound selected from the group consisting of group 14 elements, group 15 elements, and group 16 elements, and still more preferably contains at least one selected from the group consisting of a tellurious acid compound, a selenious acid compound, an arsenious acid compound, and an orthosilicic acid compound.

### (First porous layer and second porous layer)

The first porous layer and the second porous layer preferably have a porosity having high gas permeability so as not to cause the diffusion resistance of the source gas fed to resin composition layer 15 of acidic gas separation membrane 10, particularly the acidic gas in the components that are contained in the source gas.

Each of the first porous layer and the second porous layer preferably contains a resin material. Examples of the resin material contained in the first porous layer and the second porous layer include polyolefin resins such as polyethylene (PE) and polypropylene (PP); fluorine-containing resins such as polytetrafluoroethylene (PTFE), polyvinyl fluoride (PVF), and polyvinylidene fluoride (PVDF); polyester resins such as polyethylene terephthalate (PET) and polyethylene naphthalate; and resin materials such as polystyrene (PS), polyethersulfone (PES), polyphenylene sulfide (PPS), polysulfone (PSF), polyacrylonitrile (PAN), polyphenylene oxide (PPO), polyamide (PA), polyimide (PI), polyetherimide (PEI), polyetheretherketone (PEEK), high-molecular-weight polyesters, heat-resistant polyamides, aramids, and polycarbonates. Among these, from the viewpoint of water repellency, a polyolefin resin or a fluorine-containing resin is preferable, and PTFE, PE, and PP are preferable. The first porous layer and the second porous layer containing the resin material may be subjected to a surface treatment such as a corona treatment or a plasma treatment. The surface treatment makes it possible to improve the coatability for applying the coating liquid containing the resin composition to the first porous layer, and to improve the affinity between the membrane of the coating liquid and the second porous layer laminated on the membrane.

Examples of the materials contained in the first porous layer and the second porous layer include inorganic materials such as metals, glass, and ceramics in addition to the resin materials, and the inorganic materials and the resin materials may be contained. The material forming the first porous layer and the material forming the second porous layer may be the same material or different materials.

A porous body may be further laminated on surfaces of the first porous layer and the second porous layer not in contact with the gas separation functional layer for the purpose of additionally imparting a strength to the first porous layer and the second porous layer. As the porous body, the resin materials and inorganic materials exemplified in connection with the first porous layer and the second porous layer, and non-woven fabrics or woven fabrics containing these materials can be suitably used.

### (Method for producing acidic gas separation membrane)

A method for producing an acidic gas separation membrane 10 includes: preparing a coating liquid containing the resin composition (hereinafter, may be referred to as "preparation step"); and applying the coating liquid onto a first porous layer 11 (hereinafter, may be referred to as "coating step"), and is a method for forming a resin composition layer 15 on first porous layer 11.

The preparation step is a step of preparing the coating liquid to be applied onto first porous layer 11 with use of the resin composition. In the preparation step, for example, the coating liquid can be prepared by mixing the resin composition with the medium. As the medium, the media described above can be used. When the resin composition contains the medium as the other component described above, the resin composition may be used as the coating liquid. The preparation step may include a defoaming step for removing air bubbles contained in the prepared coating liquid. Examples of the defoaming step include a method in which shear is applied by stirring or filtering the coating liquid, a method in which the coating liquid is vacuum-degassed or degassed under low pressure, and a method in which the coating liquid is degassed by warming.

The coating step is a step of applying the coating liquid prepared in the preparation step onto first porous layer 11. The coating step can be performed by slot die coating, spin coating, bar coating, die coating, blade coating, air-knife coating, gravure coating, roll coating, spray coating, dip coating, Comma roll method, kiss coater method, screen printing, and inkjet printing and the like.

The coating step preferably includes a step of removing the medium from the membrane of the coating liquid formed by applying the coating liquid onto first porous layer 11. Examples of the step of removing the medium include a method in which the medium is removed by evaporation from the membrane of the coating liquid by heating or the like.

When acidic gas separation membrane 10 includes first porous layer 11, resin composition layer 15, and second porous layer 12 in this order, the method for producing acidic gas separation membrane 10 may include a step of laminating second porous layer 12 on the side of the membrane of the coating liquid opposite to first porous layer 11. After second porous layer 12 is laminated, a step of further removing the medium in the membrane of the coating liquid may be performed.

### (Acidic gas separation membrane element)

The acidic gas separation membrane can be used for known acidic gas separation membrane elements such as spiral-wound type, flat-membrane type, hollow fiber type, a tube type, pleated type, and plate-and-frame type acidic gas separation membrane elements.

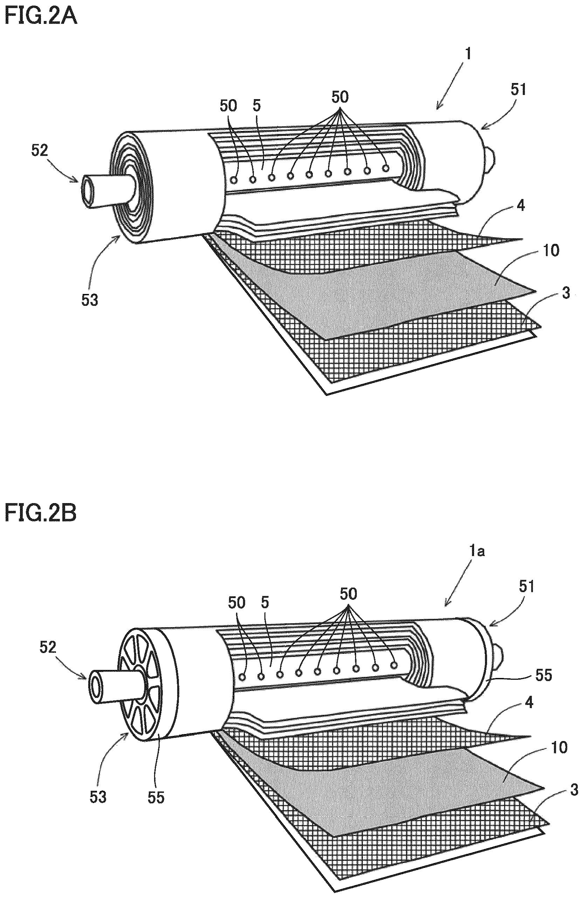

Each of Figs. 2A and 2B is a schematic perspective view showing an example of an acidic gas separation membrane element including the acidic gas separation membrane, in which a partially developed portion is provided. As shown in Figs. 2A and 2B, spiral-wound type acidic gas separation membrane element 1, 1a may include a feed-side flow path member 3 in which a source gas containing an acidic gas flows, an acidic gas separation membrane 10 that selectively separates the acidic gas contained in the source gas flowing in feed-side flow path member 3 to cause the acidic gas to permeate therethrough, a permeate-side flow path member 4 in which the permeate gas containing the acidic gas that has permeated through acidic gas separation membrane 10 flows, a sealing part for preventing the mixing of the source gas with the permeate gas, and a central tube 5 for collecting the permeate gas flowing in permeate-side flow path member 4. The spiral-wound type gas separation membrane element may include a wound body that includes central tube 5 and an element-use laminated body wound around central tube 5. In the element-use laminated body, at least one feed-side flow path member 3, at least one acidic gas separation membrane 10, and at least one permeate-side flow path member 4 are laminated. The wound body may have any shape such as a cylindrical shape or a rectangular cylindrical shape. Central tube 5 has a plurality of holes 50 in the outer peripheral surface of central tube 5. Holes 50 communicate between a flow path space for the permeate gas formed by permeate-side flow path member 4 and an inner hollow space of central tube 5.

Acidic gas separation membrane element 1a may further include a fixing member such as an outer peripheral tape or an anti-telescope device 55 shown in Fig. 2B in order to prevent the wound body from rerolling or the collapse of rolling. In order to secure a strength against a load due to internal pressure and external pressure on acidic gas separation membrane element 1a, an outer wrap (reinforcing layer) may be provided on the outermost periphery of the wound body.

### (Acidic gas separation membrane module)

Acidic gas separation membrane element 1, 1a can be used for an acidic gas separation membrane module. The acidic gas separation membrane module includes one or more acidic gas separation membrane elements 1, 1a. The gas separation membrane module includes a source gas feed port (portion communicating with a feed-side end part 51 shown in Fig. 2B) for feeding the source gas to acidic gas separation membrane 10, a permeate gas discharge port (portion communicating with a discharge port 52 shown in Fig. 2B) for discharging the permeate gas that has permeated through acidic gas separation membrane 10, and a retentate gas discharge port (a portion communicating with a discharge-side end part 53 shown in Fig. 2B) for discharging the source gas that has not permeated through acidic gas separation membrane 10. The source gas feed port, the retentate gas discharge port, and the permeate gas discharge port may be provided in the main body of gas separation membrane element 1, 1a, or provided in a container for storing acidic gas separation membrane element 1, 1a (hereinafter, referred to as "housing").

The housing can form a space for sealing the source gas flowing in the gas separation membrane module. The housing may include, for example, a cylindrical member made of stainless steel and the like, and a blocking member for blocking both the axial ends of the cylindrical member. The housing may have any shape such as a cylindrical shape or a rectangular cylindrical shape. However, the housing preferably has a cylindrical shape since acidic gas separation membrane element 1, 1a usually has a cylindrical shape. A partition can be provided in the housing to prevent the mixing of the source gas fed to feed-side end part 51 with the retentate gas that has not permeate through acidic gas separation membrane 10 provided in the acidic gas separation membrane element.

When two or more acidic gas separation membrane elements 1, 1a are disposed in the housing, the source gases fed to respective gas separation membrane elements 1, 1a may be fed in parallel or in series. Here, feeding source gases in parallel means that at least the source gases are distributed and introduced into a plurality of acidic gas separation membrane elements 1, 1a. Feeding source gases in series means that at least a permeate gas and/or a retentate gas discharged from upstream acidic gas separation membrane element 1, 1a is introduced into downstream acidic gas separation membrane element 1, 1a.

### (Acidic gas separation device)

An acidic gas separation device includes acidic gas separation membrane 10. The acidic gas separation device may include, for example, at least one acidic gas separation membrane module to include acidic gas separation membrane 10. The arrangement and number of the acidic gas separation membrane modules provided in the acidic gas separation device can be selected according to the required throughput, the recovery rate of the acidic gas, and the size of a place in which the acidic gas separation device is installed, and the like.

### (Acidic gas separation method)

An acidic gas separation method includes bringing a source gas containing at least an acidic gas into contact with acidic gas separation membrane 10 to separate the acidic gas. The method for bringing the source gas into contact with acidic gas separation membrane 10 can be performed with use of, for example, the acidic gas separation device including the acidic gas separation membrane module described above.

The acidic gas separation method may be performed by a method in which the pressure of the source gas fed to the feed-side of acidic gas separation membrane 10 is increased by a compressor or the like, so that the feed-side gas partial pressure is set to be higher than the permeate-side (discharge side of the permeate gas of acidic gas separation membrane 10) gas partial pressure; a method in which the permeate-side of acidic gas separation membrane 10 is set to a reduced-pressure state to set the feed-side gas partial pressure to be higher than the permeate-side gas partial pressure ("pressure reduction method"); a method in which the amount of the permeate gas is increased by feeding a sweep gas to be discharged together with the permeate gas to the permeate-side of acidic gas separation membrane 10 ("sweep method"); and a method in which two or more of the methods are combined, and the like.

The acidic gas separation method may be performed by, for example, a one-stage separation method described in Examples to be described later, a two-stage separation method described in Figs. 4, 5, 7, and 9 of Japanese Patent No. 5858992, or a three-stage separation method described in Fig. 11 of Japanese Patent No. 5858992.

The acidic gas contained in the source gas is as described above. Examples of a non-acidic gas other than the acidic gas contained in the source gas include at least one selected from the group consisting of hydrogen, hydrocarbon, nitrogen, and carbon monoxide. The source gas preferably contains water. The relative humidity of the source gas is not particularly limited, but can be, for example, greater than or equal to 30% RH and less than or equal to 100% RH, and may be greater than or equal to 50% RH and less than or equal to 100% RH, or greater than or equal to 70% RH and less than or equal to 100% RH.

### EXAMPLES

Hereinafter, the present invention will be more specifically described with reference to Examples and Comparative Examples; however, the present invention is not intended to be limited thereto.

### [Synthesis Example 1]

30.0 g of a 15% by mass polyallylamine aqueous solution (PAA-15C manufactured by Nittobo Medical Co., Ltd., molecular weight: 15000) was concentrated with an evaporator to remove moisture. Thereto were added 150 mL of methanol and 55.0 mL of triethylamine to obtain a homogeneous solution. A mixture of 15.0 mL of methanol and 7.3 mL of methyl bromoacetate (manufactured by Tokyo Chemical Industry Co., Ltd.) was added dropwise thereto at room temperature to obtain a slurry containing a gel-like polymer. This slurry was filtered under suction. The gel-like polymer collected by filtration was washed with methanol (100 mL × 2), and filtered under suction again. The obtained solid was then dried at 80°C for 3 hours to obtain methoxycarbonylmethyl group-modified polyallylamine (8.9 g, yield: 87%). In the methoxycarbonylmethyl group-modified polyallylamine, a structure represented by ^{∗}-CH₂C(=O)OCH₃ [^{∗} represents a bond with a nitrogen atom constituting polyallylamine] was introduced into the polyallylamine.

### [Synthesis Example 2]

13.1 g of the methoxycarbonylmethyl group-modified polyallylamine obtained in Synthesis Example 1, 78.5 g of choline (47% by weight aqueous solution manufactured by Tokyo Chemical Industry Co., Ltd.) for hydrolyzing a methyl ester moiety of a methoxycarbonylmethyl group into a salt form, and 30 g of water were mixed, and the mixture was stirred at room temperature for 3 hours. The obtained suspension was filtered with suction. The solid collected by filtration was washed twice with 10 mL of water, and dried under reduced pressure to obtain carboxymethyl group-modified polyallylamine in the form of a salt having a 2-hydroxyethyltrimethylammonium cation as a cation for forming a carboxy group into the form of a salt (19.4 g, yield: 88%).

### [Synthesis Example 3]

43.7 g of a 50% by mass polyethyleneimine solution (Lupasol P manufactured by BASF, molecular weight: 750,000), 43 g of water, and 52.9 g of a 28% by weight sodium hydroxide aqueous solution were mixed, and the mixture was stirred. A mixture of 43.1 g of sodium chloroacetate and 94.2 g of water was added dropwise thereto at room temperature to obtain an aqueous solution. Subsequently, the obtained aqueous solution was subjected to electrodialysis with use of Micro Acilyzer S1 (manufactured by ASTOM Corporation) for desalinating, and the obtained aqueous solution was dried under reduced pressure and then dried overnight at 100°C to obtain carboxy group-modified polyethyleneimine (7.7 g, yield: 46.4%). In the carboxy group-modified polyethyleneimine, a structure represented by ^{∗}-CH₂C(=O)OH [^{∗} represents a bond with a nitrogen atom constituting polyethyleneimine] was introduced into the polyethyleneimine.

### [Synthesis Example 4]

10.0 g of a 10% by mass polyvinylamine aqueous solution (PVAM-0595B manufactured by Mitsubishi Chemical Corporation, molecular weight: 70,000) was concentrated with an evaporator to remove moisture. Thereto were added 100 mL of methanol and 16.2 mL of triethylamine to obtain a homogeneous solution. To this homogeneous solution, a mixture of 5.0 mL of methanol and 2.1 mL of methyl bromoacetate (manufactured by Tokyo Chemical Industry Co., Ltd.) was added dropwise at room temperature to obtain a slurry containing a gel-like polymer. This slurry was filtered under suction. The gel-like polymer collected by filtration was washed with methanol (100 mL × 2), and filtered under suction again. The obtained solid was then dried at 80°C for 3 hours to obtain methoxycarbonylmethyl group-modified polyvinylamine (2.1 g, yield: 78%). In the methoxycarbonylmethyl group-modified polyvinylamine, a structure represented by ^{∗}-CH₂C(=O)OCH₃ [^{∗} represents a bond with a nitrogen atom constituting polyvinylamine] was introduced into the polyvinylamine.

### [Example 1]

1.14 g of the methoxycarbonylmethyl group-modified polyallylamine obtained in Synthesis Example 1, 22.9 g of water, and 2.65 g of a 50% by weight cesium hydroxide aqueous solution for hydrolyzing a methoxycarbonylmethyl group to form a carboxy group in the form of a Cs salt were mixed, and the mixture was stirred. The content of a cation (Cs) that forms a salt with a carboxy group is greater than or equal to 5.0×10⁻³ mol/g. To this mixture, 0.11 g of non-crosslinked polyacrylic acid (AQUPAANA manufactured by Sumitomo Seika Chemicals Co., Ltd.), 0.54 g of crosslinked polyacrylic acid (AQUPEC manufactured by Sumitomo Seika Chemicals Co., Ltd.), 2.5 g of a 50% by mass cesium hydroxide aqueous solution for forming the carboxy group of the non-crosslinked and crosslinked polyacrylic acids into the form of a Cs salt, 14.0 g of water, and 0.20 g of a 10% by weight surfactant ("Surflon S-242" manufactured by AGC Seimi Chemical Co., Ltd.) were mixed, and the mixture was stirred, to obtain a coating liquid.

The obtained coating liquid was applied onto a hydrophobic PTFE porous membrane ("Poreflon HP-010-50" manufactured by Sumitomo Electric Fine Polymer Cooperation, film thickness: 50 µm, pore diameter: 0.1 µm, 40 g/m²) to form a coating film, and the same hydrophobic PTFE porous membrane as described above was then laminated on the obtained coating film. With use of a dryer, the coating film was dried at a temperature of about 100°C in the air atmosphere for about 15 minutes to form a gel-like resin composition layer, thereby preparing an acidic gas separation membrane having a layer structure of hydrophobic PTFE porous membrane/resin composition layer/hydrophobic PTFE porous membrane (thickness of resin composition layer; 23 µm).

### [Example 2]

5.72 g of the carboxymethyl group-modified polyallylamine in the form of a salt having a 2-hydroxyethyltrimethylammonium cation obtained in Synthesis Example 2 and 90 g of water were mixed, and the mixture was stirred to prepare a 6% by weight carboxymethyl group-modified polyallylamine aqueous solution in the form of a salt having a 2-hydroxyethyltrimethylammonium cation as a counter cation of a carboxy group. The content of the cation (2-hydroxyethyltrimethylammonium cation) that forms a salt in the carboxymethyl group-modified polyallylamine is greater than or equal to 5.0×10⁻³ mol/g.

32.0 g of this aqueous solution, 0.11 g of non-crosslinked polyacrylic acid ("AQUPAANA manufactured by Sumitomo Seika Chemicals Co., Ltd.), 0.54 g of crosslinked polyacrylic acid (AQUPEC manufactured by Sumitomo Seika Chemicals Co., Ltd.), 5.0 g of water, 0.22 g of a 10% by weight surfactant (manufactured by AGC Seimi Chemical Co., Ltd.), and 2.49 g of a 50% by mass cesium hydroxide aqueous solution for neutralizing carboxy groups of the non-crosslinked and crosslinked polyacrylic acids were mixed, and the mixture was stirred to obtain a coating liquid. With use of this coating liquid, an acidic gas separation membrane was prepared in the same manner as in Example 1 (thickness of resin composition layer; 17 µm).

### [Example 3]

1.78 g of the carboxy group-modified polyethyleneimine obtained in Synthesis Example 3, 2.74 g of water, and 6.4 g of a 50% by mass cesium hydroxide aqueous solution were mixed, and the mixture was stirred to prepare a carboxy group-modified polyethyleneimine aqueous solution in the form of a Cs salt. The content of a cation (Cs) that forms a salt with a carboxy group is greater than or equal to 5.0×10⁻³ mol/g. Subsequently, 1.39 g of polyethylene glycol 2000 (manufactured by Tokyo Chemical Industry Co., Ltd.) and 0.035 g of a 10% by weight surfactant ("Surflon S-242" manufactured by AGC Seimi Chemical Co., Ltd.) were mixed with the aqueous solution, and the mixture was stirred to obtain a coating liquid. With use of this coating liquid, an acidic gas separation membrane was prepared in the same manner as in Example 1 (thickness of resin composition layer; 100 µm).

### [Example 4]

1.0 g of the methoxycarbonylmethyl group-modified polyvinylamine obtained in Synthesis Example 4, 58.0 g of water, and 2.7 g of a 50% by mass cesium hydroxide aqueous solution were mixed, and the mixture was stirred to prepare a carboxy group-modified polyvinylamine aqueous solution in the form of a Cs salt. The content of a cation (Cs) that forms a salt with a carboxy group is greater than or equal to 5.0×10⁻³ mol/g. Subsequently, 0.035 g of a 10% by weight surfactant ("Surflon S-242" manufactured by AGC Seimi Chemical Co., Ltd.) was mixed with the aqueous solution, and the mixture was stirred to obtain a coating liquid. With use of this coating liquid, an acidic gas separation membrane was prepared in the same manner as in Example 1 (thickness of resin composition layer; 24 µm).

### [Comparative Example 1]

81.81 g of water, 0.22 g of non-crosslinked polyacrylic acid (AQUPAANA manufactured by Sumitomo Seika Chemicals Co., Ltd.), 1.08 g of crosslinked polyacrylic acid (AQUPEC manufactured by Sumitomo Seika Chemicals Co., Ltd.), 4.98 g of a 50% by mass cesium hydroxide aqueous solution for forming the carboxy groups of the non-crosslinked and crosslinked polyacrylic acids into the form of a salt, 1.52 g of a 50% by mass polyethyleneimine solution (Lupasol P manufactured by BASF), and 0.39 g of a 10% by weight surfactant ("Surflon S-242" manufactured by AGC Seimi Chemical Co., Ltd.) were mixed, and the mixture was stirred to obtain a coating liquid. With use of this coating liquid, an acidic gas separation membrane was prepared in the same manner as in Example 1 (thickness of resin composition layer; 19 µm).

### [Comparative Example 2]

46.59 g of water, 0.22 g of non-crosslinked polyacrylic acid (AQUPAANA manufactured by Sumitomo Seika Chemicals Co., Ltd.), 1.08 g of crosslinked polyacrylic acid (AQUPEC manufactured by Sumitomo Seika Chemicals Co., Ltd.), 4.98 g of a 50% by mass cesium hydroxide aqueous solution for forming the carboxy groups of the non-crosslinked and crosslinked polyacrylic acids into the form of a salt, 6.73 g of a 15% by mass polyallylamine aqueous solution (PAA-15 C manufactured by Nittobo Medical Co., Ltd.), and 0.39 g of a 10% by weight surfactant ("Surflon S-242" manufactured by AGC Seimi Chemical Co., Ltd.) were mixed, and the mixture was stirred to obtain a coating liquid. With use of this coating liquid, an acidic gas separation membrane was prepared in the same manner as in Example 1 (thickness of resin composition layer; 20 µm).

### [Comparative Example 3]

1.63 g of water, 2.55 g of a 50% by mass cesium hydroxide aqueous solution, 1.43 g of polyethylene glycol 2000 (manufactured by Tokyo Chemical Industry Co., Ltd.), 3.93 g of carboxymethyl chitosan (deacetylation degree: 90%; manufactured by AK Scientific), and 0.035 g of a 10% by weight surfactant ("Surflon S-242" manufactured by AGC Seimi Chemical Co., Ltd.) were mixed, and the mixture was stirred to obtain a coating liquid. With use of this coating liquid, an acidic gas separation membrane was prepared in the same manner as in Example 1 (thickness of resin composition layer; 1040 µm).

### [Comparative Example 4]

41.0 g of a 21% by mass polyvinylamine aqueous solution (Lupasol NW3 manufactured by BASF) and 10.3 g of water were mixed, and the mixture was stirred. Thereto was added dropwise 5.8 mL of propylene oxide (manufactured by Tokyo Chemical Industry Co., Ltd.) at room temperature, and the mixture was stirred for 1 day and then degassed to obtain a hydroxypropyl group-modified (hereinafter, may be referred to as "propylene glycol-modified") polyvinylamine aqueous solution. In the propylene glycol-modified polyvinylamine, a structure represented by ^{∗} - CH₂CH(OH)CH₃ [^{∗} represents a bond with a nitrogen atom constituting polyvinylamine] was introduced into the polyvinylamine.

Subsequently, 7.0 g of water, 3.0 g of the propylene glycol-modified polyvinylamine obtained in the above procedure, and 0.010 g of a 10% by weight surfactant ("Surflon S-242" manufactured by AGC Seimi Chemical Co., Ltd.) were mixed, and the mixture was stirred to obtain a coating liquid. With use of this coating liquid, an acidic gas separation membrane was prepared in the same manner as in Example 1 (thickness of resin composition layer; 28 µm).

### [Comparative Example 5]

17.2 g of a 50% by mass polyethyleneimine aqueous solution (Lupasol P manufactured by BASF, molecular weight: 750,000) and 34.5 g of water were mixed, and the mixture was stirred. 10.31 mL of 1,2-butylene oxide (manufactured by Tokyo Chemical Industry Co., Ltd.) was added dropwise thereto at room temperature, and the mixture was stirred for 2 days to obtain a 28.5% by mass hydroxybutyl group-modified (hereinafter, may be referred to as "butylene glycol-modified") polyethyleneimine aqueous solution. In the butylene glycol-modified polyethyleneimine, a structure represented by ^{∗} -CH₂CH(OH)CH₂CH₃ [^{∗} represents a bond with a nitrogen atom constituting polyethyleneimine] was introduced into the polyethyleneimine.

Subsequently, 4.64 g of water, 2.78 g of polyethylene glycol 2000 (manufactured by Tokyo Chemical Industry Co., Ltd.), 10.0 g of the butylene glycol-modified polyethyleneimine aqueous solution obtained in the above procedure, and 0.012 g of a 10% by weight surfactant ("Surflon S-242" manufactured by AGC Seimi Chemical Co., Ltd.) were mixed, and the mixture was stirred to obtain a coating liquid. With use of this coating liquid, an acidic gas separation membrane was prepared in the same manner as in Example 1 (thickness of resin composition layer; 163 µm).

### [Evaluation of gas separation performance]

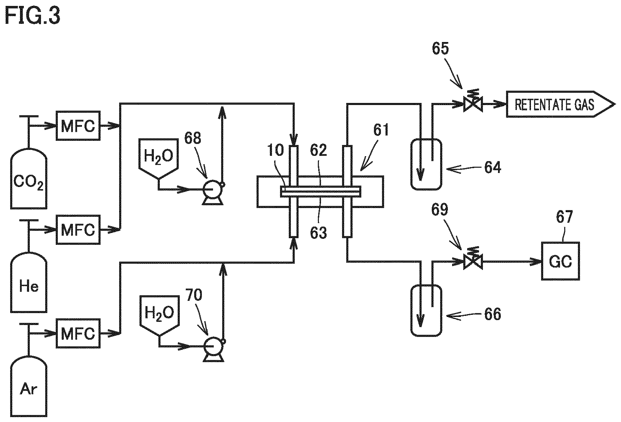

The gas separation performances of acidic gas separation membranes 10 prepared in Examples and Comparative Examples were evaluated with use of an acidic gas separation device including an acidic gas separation membrane cell 61 shown in Fig. 3. Specifically, acidic gas separation membrane 10 prepared in each of Examples and Comparative Examples was cut into an appropriate size to have a flat membrane shape, and each of the flat membranes was fixed between a feed-side chamber 62 and a permeate-side chamber 63 of stainless steel acidic gas separation membrane cell 61.

A mixed gas (CO₂: 101 mL/min, He: 199 mL/min, water (liquid): 326 µL/min) was fed to feed-side chamber 62 through a flow rate regulator MFC, and a sweep gas (Ar: 30 mL/min, water (liquid): 42 µL/min) was fed to permeate-side chamber 63 (water was fed via liquid feed pumps 68 and 70). With use of back pressure regulators 65 and 69 provided on the downstream side of cooling traps 64 and 66, the back pressure of feed-side chamber 62 was adjusted to 125 kPa (absolute pressure) and the back pressure of permeate-side chamber 63 was adjusted to 0 kPa (gauge pressure). The permeances [mol/(m²·sec·kPa)] of CO₂ and He contained in a permeate gas were calculated by quantifying a gas flow rate after water vapor in the sweep gas discharged from permeate-side chamber 63 was removed by cooling trap 66 based on the analysis results of a gas chromatograph 67. Acidic gas separation membrane cell 61 was kept at 96°C. The results are shown in Table 1. In Table 1, "leakage" indicates that leakage occurs and the permeance cannot be measured.

[

**Table 1]**

| | Water-absorbent resin | | Polyamine | | | Permeance [mol/(m^{2∗}sec^{∗} kPa)] | |
|---|---|---|---|---|---|---|---|
| | Resin | Cation^{∗1} | Modified/ Unmodified | Type | Cation^{∗2} | | |
| | | | | | | CO₂ | He |
| Example 1 | PAA | Cs ion | Modified | PAAm | Cs ion | 1.9 × 10⁻⁵ | 5.0 × 10⁻⁷ |
| Example 2 | PAA | Cs ion | Modified | PAAm | NH₄ ion^{∗3} | 1.7 × 10⁻⁵ | 4.4 × 10⁻⁷ |
| Example 3 | PEG | - | Modified | PEI | Cs ion | 2.4 × 10⁻⁵ | 1.2 × 10⁻⁶ |
| Example 4 | - | - | Modified | PVAm | Cs ion | 4.8 × 10⁻⁵ | 7.5 × 10⁻⁷ |
| Comparative Example 1 | PAA | Cs ion | Unmodified | PEI | - | Leakage | |
| Comparative Example 2 | PAA | Cs ion | Unmodified | PAAm | - | 1.1 × 10⁻⁵ | 2.4 × 10⁻⁷ |
| Comparative Example 3 | PEG | - | Modified | Chitosan | Cs ion | Leakage | |
| Comparative Example 4 | - | - | Modified^{∗4} | PVAm | - | 5.0 × 10⁻⁶ | 2.8 × 10⁻⁷ |
| Comparative Example 5 | PEG | - | Modified^{∗5} | PEI | - | 5.9 × 10⁻⁶ | 3.9 × 10⁻⁶ |

Abbreviations in Table stand for the following.
PAA: non-crosslinked polyacrylic acid and crosslinked polyacrylic acid
PEG: polyethylene glycol
PAAm: polyallylamine
PEI: polyethyleneimine
^{∗}1: cation forming salt of acidic dissociable group of water-absorbent resin
^{∗}2: cation forming salt of acidic dissociable group of modified polyamine
^{∗}3: 2-hydroxyethyltrimethylammonium cation
^{∗}4: propylene glycol-modified
^{∗}5: butylene glycol-modified

As described above, the acidic gas separation membranes obtained in Examples are found to have good permeance. In the acidic gas separation membranes obtained in Examples, the resin composition layer is formed with use of the resin composition containing the modified polyamine in which the acidic dissociable group is introduced into the polyamine, whereby the modified polyamine is less likely to flow out of the resin composition layer, which can be expected to be able to stably maintain the separation performance of the acidic gas over time.

### REFERENCE SIGNS LIST

1, 1a: gas separation membrane element, 3: feed-side flow path member, 4: permeate-side flow path member, 5: central tube, 10: acidic gas separation membrane, 11: first porous layer, 12: second porous layer, 15: resin composition layer, 50: hole, 51: feed-side end part, 52: discharge port, 53: discharge-side end part, 55: anti-telescope device, 61: gas separation membrane cell, 62: feed-side chamber, 63: permeate-side chamber, 64: cooling trap, 65: back pressure regulator, 66: cooling trap, 67: gas chromatograph, 68: liquid feed pump, 69: back pressure regulator, 70: liquid feed pump

## Claims

1. An acidic gas separation membrane selectively permeable to an acidic gas, the acidic gas separation membrane comprising:
a first porous layer; and
a resin composition layer formed on the first porous layer with use of a resin composition,
wherein the resin composition contains a modified polyamine obtained by introducing at least one of an acidic dissociable group and a salt thereof into a polyamine,
the acidic dissociable group is at least one selected from the group consisting of a carboxy group, a sulfonic acid group, an oxysulfonic acid group, a phosphoric acid group, and an oxyphosphoric acid group, and
the polyamine is at least one selected from the group consisting of polyethyleneimine, polyallylamine, and polyvinylamine.

2. The acidic gas separation membrane according to claim 1, wherein
the modified polyamine has the salt of the acidic dissociable group, and
a content of a cation forming the salt of the acidic dissociable group (number of moles of cation [mol]/mass of modified polyamine [g]) is greater than or equal to 5.0×10⁻³ mol/g.

3. The acidic gas separation membrane according to claim 1 or 2, wherein the cation forming the salt of the acidic dissociable group is at least one selected from the group consisting of an alkali metal ion, an ammonium ion, and a phosphonium ion.

4. The acidic gas separation membrane according to any one of claims 1 to 3, wherein the acidic dissociable group contains at least a carboxy group.

5. The acidic gas separation membrane according to any one of claims 1 to 4, wherein the resin composition layer further contains a water-absorbent resin.

6. The acidic gas separation membrane according to any one of claims 1 to 5, wherein the acidic gas separation membrane includes a second porous layer on a side of the resin composition layer opposite to the first porous layer.

7. An acidic gas separation device comprising the acidic gas separation membrane according to any one of claims 1 to 6.

8. A method for producing an acidic gas separation membrane selectively permeable to an acidic gas, the method comprising applying a coating liquid onto a first porous layer,
wherein the coating liquid contains a resin composition containing a modified polyamine obtained by introducing at least one of an acidic dissociable group and a salt thereof into a polyamine,
the acidic dissociable group is at least one selected from the group consisting of a carboxy group, a sulfonic acid group, and a phosphoric acid group, and
the polyamine is at least one selected from the group consisting of polyethyleneimine, polyallylamine, and polyvinylamine.

9. An acidic gas separation method comprising bringing a source gas containing at least an acidic gas into contact with the acidic gas separation membrane according to any one of claims 1 to 6 to separate the acidic gas.
